Europäisches Patentamt

European Patent Office

Office européen des brevets

(19)

(11) **EP 1 326 072 A1**

(12) **EUROPEAN PATENT APPLICATION**
published in accordance with Art. 158(3) EPC

(43) Date of publication:
**09.07.2003 Bulletin 2003/28**

(51) Int Cl.⁷: **G01N 30/06**

(21) Application number: **01965572.9**

(86) International application number:
**PCT/JP01/07892**

(22) Date of filing: **12.09.2001**

(87) International publication number:
**WO 02/023181 (21.03.2002 Gazette 2002/12)**

(84) Designated Contracting States:
**AT BE CH CY DE DK ES FI FR GB GR IE IT LI LU MC NL PT SE TR**

(30) Priority: **12.09.2000 JP 2000276208**

(71) Applicant: **SHINO-TEST CORPORATION Chiyoda-ku, Tokyo 101-8410 (JP)**

(72) Inventors:
• **OHKUBO, Aya, Res Cent (Shin-Yokohama), Shiseido Yokohama-shi, Kanagawa 224-0025 (JP)**
• **SHIROTA, Osamu, Res Cent (Shin-Yokohama), Shiseido Yokohama-shi, Kanagawa 224-0025 (JP)**
• **SATO, Makoto, Sagamihara Office, Shino-Test Corp Sagamihara-shi, Kanagawa 229-0011 (JP)**
• **YOSHIMURA, Hajime, Sagamihara Off, Shino-Test Corp Sagamihara-shi, Kanagawa 229-0011 (JP)**

(74) Representative:
**Ziebig, Marlene, Dr. Dipl.-Chem. et al Schützenstrasse, 15-17 10117 Berlin (DE)**

(54) **CHELATE REAGENT FOR MEASURING ALUMINUM AND MEASURING METHOD**

(57)    By providing a chelating reagent for aluminum measurement that contains an analytical chelating agent, used in a method for measuring an aluminum content in a sample by forming a complex between the aluminum in the sample and the analytical chelating agent under conditions in which the equivalent concentration of the analytical chelating agent in the reaction solution is not less than 6 times greater than the conventional concentration, and detecting that complex by chromatography, the aluminum content in the sample can be measured both easily and highly accurately by chromatography without being affected by interfering substances.

EP 1 326 072 A1

**Description**

BACKGROUND OF THE INVENTION

Technical Field

The present invention relates to a chelating reagent and measurement method capable of easily and accurately measuring aluminum content in a sample by chromatography without being affected by interfering substances. The chelating reagent and measurement method of the present invention are suited for measurement of aluminum contained in, for example, biological materials, foods, beverages, drinking water, reagents, pharmaceuticals, river water, lake water, seawater and soil, and are particularly preferable for measurement of blood aluminum concentration of dialysis patients in the field of clinical laboratory testing as well as measurement of aluminum concentration in pharmaceuticals.

Background Art

Conventional reagents for measuring aluminum typically contain roughly 15-40 times the equivalent of analytical chelating agent based on the upper limit concentration of aluminum capable of being present in the sample (8-quinolinol: Sato, et al., Journal of Chromatography A, Vol. 789, 361-367, 1997; lumogallion: Wu, et al., Journal of Chromatography, Vol. B. 663, 247-253, 1995; DHAB (2,2'-dihydroxy-azobenzene): Kaneko, et al., Analytical Chemistry, Vol. 63, 2219-2222, 1991).
However, when the inventors of the present invention recently performed measurements on the same sample by HPLC using a conventional reagent and flameless atomic absorption, in the case of HPLC using a conventional reagent, measured values were noticed to be lower due to the effects of interfering substances present in the sample. For example, in patients with diseases such as primary hemochromatosis or secondary hemochromatosis, in the case interfering substances such as deferoxamine administered as a drug for increasing excretion of iron into the urine or other pharmaceuticals capable of binding with aluminum (such as citric acid, fluorine, ascorbic acid or glutathione used in blood preparations) are present in serum or other samples from those patients, measured values of aluminum have been confirmed to be lower than the proper values. In addition, similar findings are obtained in the case iron ions, copper ions or zinc ions are present in samples. This situation presents the serious problem in which persons being tested that are inherently ill end up having the possibility of not being recognized as patients. On the other hand, flameless atomic absorption has the shortcoming of the flameless atomic absorption system required for carrying out that method being expensive.
The object of the present invention is to provide a chelating reagent for aluminum measurement that is capable of capturing substantially all aluminum present in a sample regardless of the type of sample.

DISCLOSURE OF THE INVENTION

The present invention (1) is a chelating reagent for aluminum measurement that contains an analytical chelating agent, used in a method for measuring an aluminum content in a sample by forming a complex between the aluminum in the sample and the analytical chelating agent under conditions in which the equivalent concentration of the analytical chelating agent in the reaction solution is not less than 6 times the conventional concentration, and detecting that complex by chromatography.
In addition, the present invention (2) is the chelating reagent for aluminum measurement of invention (1) above, wherein a complex is formed between the aluminum in the sample and the analytical chelating agent under conditions in which the equivalent concentration of the analytical chelating agent in the reaction solution is not less than 10 times the conventional concentration.
Moreover, the present invention (3) is a chelating reagent for aluminum measurement of invention (1) or (2) above, wherein the analytical chelating agent is 8-quinolinol, said conventional concentration is 30 times the equivalent concentration of the aluminum concentration estimated to be contained in the reaction solution, and the concentration of the analytical chelating agent in said chelating reagent is not less than 540 times the equivalent concentration of the aluminum concentration estimated to be contained in the sample.
In addition, the present invention (4) is the chelating reagent for aluminum measurement of invention (3) above, wherein the concentration of the analytical chelating agent in said chelating reagent is not less than 900 times the equivalent concentration of the aluminum concentration estimated to be contained in the sample.
Moreover, the present invention (5) is the chelating reagent for aluminum measurement of invention (1) or (2) above, wherein the analytical chelating agent is lumogallion, said conventional concentration is 40 times the equivalent concentration of the aluminum concentration estimated to be contained in the reaction solution, and the concentration of the analytical chelating agent in said chelating reagent is not less than 486 times the equivalent concentration of the aluminum concentration estimated to be contained in the sample.

In addition, the present invention (6) is the chelating reagent for aluminum measurement of invention (5) above, wherein the concentration of the analytical chelating agent in said chelating reagent is not less than 810 times the equivalent concentration of the aluminum concentration estimated to be contained in the sample.

Moreover, the present invention (7) is the chelating reagent for aluminum measurement of invention (1) or (2) above, wherein the analytical chelating agent is 2,2'-di-hydroxy-azobenzene, said conventional concentration is 15 times the equivalent concentration of the aluminum concentration estimated to be contained in the reaction solution, and the concentration of the analytical chelating agent present in said chelating reagent is not less than 81 times the equivalent concentration of the aluminum concentration estimated to be contained in the sample.

In addition, the present invention (8) is the chelating reagent for aluminum measurement of invention (7) above, wherein the concentration of the analytical chelating agent in said chelating reagent is not less than 135 times the equivalent concentration of the aluminum concentration estimated to be contained in the sample.

Moreover, the present invention (9) is the chelating reagent for aluminum measurement of any of inventions (1) through (8) above, wherein the chromatography is in accordance with the pre-column derivitization method in which the chromatographic mobile phase does not contain analytical chelating agent.

In addition, the present invention (10) is a kit for measuring aluminum comprised of any of the chelating reagents of inventions (1) through (9) above, a buffer and chromatographic eluate (mobile phase).

Moreover, the present invention (11) is a chelating reagent for aluminum measurement that contains an analytical chelating agent, used in a method for measuring an aluminum content in a sample by forming a complex between the aluminum in the sample and the analytical chelating agent under conditions in which the equivalent concentration of analytical chelating agent in the reaction solution is not less than 243 times the concentration of aluminum estimated to be contained in the reaction solution, and detecting that complex by chromatography.

In addition, the present invention (12) is the chelating reagent for aluminum measurement of invention (11) above, wherein a complex between the aluminum in the sample and the analytical chelating agent is formed under conditions in which the equivalent concentration of the analytical chelating agent in the reaction solution is not less than 400 times the aluminum concentration estimated to be contained in the reaction solution.

Moreover, the present invention (13) is a chelating reagent for aluminum measurement that contains 8-quinolinol as analytical chelating agent used in a method for measuring the aluminum content in a sample by forming a complex between the aluminum in the sample and the 8-quinolinol under conditions in which the equivalent concentration of 8-quinolinol in the reaction solution is not less than 180 times the aluminum concentration estimated to be contained in the reaction solution, and detecting the complex by chromatography.

In addition, the present invention (14) is the chelating reagent for aluminum measurement of invention (13) above, wherein a complex is formed between the aluminum in the sample and the analytical chelating agent under conditions in which the equivalent concentration of 8-quinolinol in the reaction solution is not less than 300 times the aluminum concentration estimated to be contained in the reaction solution.

Moreover, the present invention (15) is a chelating reagent for aluminum measurement that contains lumogallion as analytical chelating agent used in a method for measuring an aluminum content in a sample by forming a complex between the aluminum in the sample and the lumogallion under conditions in which the equivalent concentration of lumogallion in the reaction solution is not less than 243 times the aluminum concentration estimated to be contained in the reaction solution, and detecting the complex by chromatography.

In addition, the present invention (16) is the chelating reagent for aluminum measurement of invention (15) above, wherein a complex is formed between the aluminum in the sample and the analytical chelating agent under conditions in which the equivalent concentration of lumogallion in the reaction solution is not less than 400 times the aluminum concentration estimated to be contained in the reaction solution.

Moreover, the present invention (17) is a chelating reagent for aluminum measurement that contains 2,2'-dihydroxy-azobenzene as analytical chelating agent using a method for measuring an aluminum content in a sample by forming a complex between the aluminum in the sample and the 2,2'-dihydroxy-azobenzene under conditions in which the equivalent concentration of 2,2'-dihydroxy-azobenzene in the reaction solution is not less than 88 times the aluminum concentration estimated to be contained in the reaction solution, and detecting the complex by chromatography.

In addition, the present invention (18) is the chelating reagent for aluminum measurement of invention (17) above, wherein a complex is formed between the aluminum in the sample and the analytical chelating agent under conditions in which the equivalent concentration of 2,2'-dihydroxy-azobenzene in the reaction solution is not less than 150 times the aluminum concentration estimated to be contained in the reaction solution.

Moreover, the present invention (19) is a chelating reagent for aluminum measurement that contains an analytical chelating agent, used in a method for measuring an aluminum content in a sample by forming a complex between the aluminum in the sample and the analytical chelating agent under conditions in which the concentration of analytical chelating agent in the reaction solution is not less than 6.67 mM, and detecting the complex by chromatography.

In addition, the present invention (20) is the chelating reagent for aluminum measurement of invention (19) above, wherein a complex is formed between the aluminum in the sample and the analytical chelating agent under conditions in which the concentration of analytical chelating agent in the reaction solution is not less than 12 mM.

Moreover, the present invention (21) is a chelating reagent for aluminum measurement that contains 8-quinolinol as analytical chelating agent using a method for measuring an aluminum content in a sample by forming a complex between the aluminum in the sample and 8-quinolinol under conditions in which the concentration of the 8-quinolinol in the reaction solution is not less than 6.67 mM, and detecting the complex by chromatography.

In addition, the present invention (22) is the chelating reagent for aluminum measurement of invention (21) above, wherein a complex is formed between the aluminum in the sample and the analytical chelating agent under conditions in which the concentration of the 8-quinolinol in the reaction solution is not less than 12 mM.

Moreover, the present invention (23) is a chelating reagent for aluminum measurement that contains lumogallion as analytical chelating agent using a method for measuring an aluminum content in a sample by forming a complex between the aluminum in the sample and the lumogallion under conditions in which the concentration of lumogallion in the reaction solution is not less than 0.9 mM, and detecting the complex by chromatography.

In addition, the present invention (24) is the chelating reagent for aluminum measurement of invention (23) above, wherein a complex is formed between the aluminum in the sample and the analytical chelating agent under conditions in which the concentration of lumogallion in the reaction solution is not less than 1.5 mM.

Moreover, the present invention (25) is a chelating reagent for aluminum measurement that contains 2,2'-dihydroxy-azobenzene as analytical chelating agent using a method for measuring an aluminum content in a sample by forming a complex between the aluminum present in the sample and the 2,2'-dihydroxy-azobenzene under conditions in which the concentration of 2,2'-dihydroxy-azobenzene in the reaction solution is not less than 0.6 mM, and detecting the complex by chromatography.

In addition, the present invention (26) is the chelating reagent for aluminum measurement of invention (25) above, wherein a complex is formed between the aluminum in the sample and the analytical chelating agent under conditions in which the concentration of 2,2'-dihydroxy-azobenzene in the reaction solution is not less than 1 mM.

Moreover, the present invention (27) is the chelating reagent for aluminum measurement of any of inventions (11) through (26) above, wherein the chromatography is in accordance with the pre-column derivitization method in which the chromatographic mobile phase does not contain analytical chelating agent.

In addition, the present invention (28) is a method for measuring an aluminum content in a sample by forming a complex between the aluminum in the sample and an analytical chelating agent under conditions in which the equivalent concentration of the analytical chelating agent in the reaction solution is not less than 6 times the conventional concentration, and detecting the complex by chromatography.

Moreover, the present invention (29) is the method for measuring the aluminum content in a sample of invention (28) above, wherein a complex is formed between the aluminum in the sample and the analytical chelating agent under conditions in which the equivalent concentration of the analytical chelating agent in the reaction solution is not less than 10 times the conventional concentration.

In addition, the present invention (30) is a method for measuring an aluminum content in a sample by forming a complex between the aluminum in the sample and an analytical chelating agent under conditions in which the equivalent concentration of the analytical chelating agent in the reaction solution is not less than 243 times the aluminum concentration estimated to be contained in the reaction solution, and detecting the complex by chromatography.

Moreover, the present invention (31) is the method for measuring the aluminum content in a sample of invention (30) above, wherein a complex is formed between the aluminum in the sample and the analytical chelating agent under conditions in which the equivalent concentration of the analytical chelating agent in the reaction solution is not less than 400 times the aluminum concentration estimated to be contained in the reaction solution.

In addition, the present invention (32) is a method for measuring an aluminum content in a sample that uses 8-quinolinol as an analytical chelating agent by forming a complex between the aluminum in the sample and the 8-quinolinol under conditions in which the equivalent concentration of 8-quinolinol in the reaction solution is not less than 180 times the aluminum concentration estimated to be contained in the reaction solution, and detecting the complex by chromatography.

Moreover, the present invention (33) is the method for measuring the aluminum content in a sample of invention (32) above, wherein a complex is formed between the aluminum in the sample and the analytical chelating agent under conditions in which the equivalent concentration of 8-quinolinol in the reaction solution is not less than 300 times the aluminum concentration estimated to be contained in the reaction solution.

In addition, the present invention (34) is a method for measuring an aluminum content in a sample that uses lumogallion as an analytical chelating agent by forming a complex between the aluminum in the sample and the lumogallion under conditions in which the equivalent concentration of lumogallion in the reaction solution is not less than 243 times the aluminum concentration estimated to be contained in the reaction solution, and detecting the complex by chromatography.

Moreover, the present invention (35) is the method for measuring the aluminum content in a sample of invention (34) above, wherein a complex is formed between the aluminum in the sample and the analytical chelating agent under conditions in which the equivalent concentration of lumogallion in the reaction solution is not less than 400 times the aluminum concentration estimated to be contained in the reaction solution.

In addition, the present invention (36) is a method for measuring an aluminum content in a sample that uses 2,2'-dihydroxy-azobenzene as an analytical chelating agent by forming a complex between the aluminum in the sample and the 2,2'-dihydroxy-azobenzene under conditions in which the equivalent concentration of 2,2'-dihydroxy-azobenzene in the reaction solution is not less than 88 times the aluminum concentration estimated to be contained in the reaction solution, and detecting the complex by chromatography.

Moreover, the present invention (37) is the method for measuring the aluminum content in a sample of invention (36) above, wherein a complex is formed between the aluminum in the sample and the analytical chelating agent under conditions in which the equivalent concentration of the 2,2'-dihydroxy-azobenzene in the reaction solution is not less than 150 times the aluminum concentration estimated to be contained in the reaction solution.

In addition, the present invention (38) is a method for measuring an aluminum content in a sample by forming a complex between the aluminum present in the sample and an analytical chelating agent under conditions in which the concentration of the analytical chelating agent in the reaction solution is not less than 6.67 mM, and detecting the complex by chromatography.

Moreover, the present invention (39) is the method for measuring the aluminum content in a sample of invention (38) above, wherein a complex is formed between the aluminum in the sample and the analytical chelating agent under conditions in which the concentration of the analytical chelating agent in the reaction solution is not less than 12 mM.

In addition, the present invention (40) is a method for measuring an aluminum content in a sample that contains 8-quinolinol as analytical chelating agent by forming a complex between the aluminum in the sample and the 8-quinolinol under conditions in which the concentration of 8-quinolinol in the reaction solution is not less than 6.67 mM, and detecting the complex by chromatography.

Moreover, the present invention (41) is a method for measuring the aluminum content in a sample of invention (40) above, wherein a complex is formed between the aluminum in the sample and the analytical chelating agent under conditions in which the concentration of the 8-quinolinol in the reaction solution is not less than 12 mM.

In addition, the present invention (42) is a method for measuring an aluminum content in a sample that contains lumogallion as analytical chelating agent by forming a complex between the aluminum in the sample and the lumogallion under conditions in which the concentration of lumogallion in the reaction solution is not less than 0.9 mM, and detecting the complex by chromatography.

Moreover, the present invention (43) is the method for measuring the aluminum content in a sample of invention (42) above, wherein a complex is formed between the aluminum in the sample and the analytical chelating agent under conditions in which the concentration of lumogallion in the reaction solution is not less than 1.5 mM.

In addition, the present invention (44) is a method for measuring an aluminum content in a sample that uses 2,2'-dihydroxy-azobenzene as analytical chelating agent by forming a complex between the aluminum in the sample and the 2,2'-dihydroxy-azobenzene under conditions in which the concentration of 2,2'-dihydroxy-azobenzene in the reaction solution is not less than 0.6 mM, and detecting the complex by chromatography.

Moreover, the present invention (45) is the method for measuring the aluminum content in a sample of invention (44) above, wherein a complex is formed between the aluminum in the sample and the analytical chelating agent under conditions in which the concentration of the 2,2'-dihydroxy-azobenzene in the reaction solution is not less than 1 mM.

In addition, the present invention (46) is the method for measuring the aluminum content in a sample of any of inventions (28) through (45) above, wherein the chromatography is in accordance with the pre-column derivitization method in which the chromatographic mobile phase does not contain analytical chelating agent.

BRIEF DESCRIPTION OF THE DRAWINGS

Fig. 1 is a graph showing measurement results in the case of the test sample being a general amino acid-xylitol preparation (concentration of added aluminum: 0 μg/L, 10 μg/L or 50 μg/L) in Example 3.

Fig. 2 is a graph showing measurement results in the case of the test sample being a sugar, amino acid, vitamin B2 and electrolyte solution for a high-calorie transfusion (concentration of added aluminum: 0 μg/L, 10 μg/L or 50 μg/L) in Example 3.

Fig. 3 is a graph showing measurement results in the case of the test sample being an aqueous nitrate solution (concentration of added aluminum: 0 µg/L, 10 µg/L or 50 µg/L) in Example 3.

BEST MODE FOR CARRYING OUT THE INVENTION

To begin with, an explanation is provided of the terms used in the present specification. The term "reaction solution" refers to the solution resulting from combining a sample and reagent. The term "conventional concentration" refers to an equivalent concentration 30 times the aluminum concentration estimated to be contained in the reaction solution in the case the analytical chelating agent is 8-quinolinol, an equivalent concentration 40 times the aluminum concentration estimated to be contained in the reaction solution in the case the analytical chelating agent is lumogallion, an equivalent concentration 15 times the aluminum concentration estimated to be contained in the reaction solution in the case the analytical chelating agent is 2,2'-dihydroxy-azobenzene, and an equivalent concentration 15 times the aluminum concentration estimated to be contained in the reaction solution in the case the analytical chelating agent is other than those indicated above. The phrase "aluminum concentration estimated to be contained in the sample" refers to a concentration of 37.06 µM in the case of a biological sample, 260 mg/Kg in the case of a food, 177.9 µM in the case of a beverage, 9.19 µM in the case of drinking water, and 37.06 µM in the case of pharmaceuticals and other samples. The phase "aluminum concentration estimated to be contained in the reaction solution" refers to the value obtained by dividing the amount of aluminum calculated based on the estimated aluminum concentration in the sample by the total amount of liquid (L) as a result of combining the sample and reagent.

The following provides a detailed explanation of the present invention. To begin with, the concentration of analytical chelating agent in the reaction solution is not less than 6 times, preferably not less than 10 times, and more preferably not less than 20 times the conventional concentration. For example, in the case the analytical chelating agent is 8-quinolinol, the analytical chelating agent has an equivalent concentration not less than 180 times (6.67 mM), and preferably not less than 300 times (12 mM), the aluminum concentration estimated to be contained in the reaction solution, while in the case the analytical chelating agent is lumogallion, the analytical chelating agent has an equivalent concentration not less than 243 times (0.9 mM), and preferably not less than 400 times (1.5 mM), the aluminum concentration estimated to be contained in the reaction solution, and in the case the analytical chelating agent is 2,2'-dihydroxy-azobenzene, the analytical chelating agent has an equivalent concentration not less than 88 times (0.6 mM), and preferably not less than 150 times (1 mM), the aluminum concentration estimated to be contained in the reaction solution. Furthermore, although there are no particular restrictions on the upper limits of these values, they correspond to the solubility of the analytical chelating agent in the reaction solution.

Next, an explanation is provided regarding the concentration of analytical chelating agent in the chelating reagent. Although there are no particular restrictions on the lower limit of this concentration, it is necessary that the concentration of analytical chelating agent in the reaction solution be not less than 6 times, and preferably not less than 10 times, the conventional concentration when the reagent is combined with the sample. In addition, the upper limit value corresponds to its solubility.

There are no particular restrictions on the analytical chelating agent provided it generates or causes a change, an optical signal, such as optical absorbance or fluorescent intensity, electrical signal, radiochemical signal or other signal, by forming a complex with aluminum, and existing analytical chelating agents may be used. Examples of analytical chelating agents include 8-quinolinol (8-hydroxyquinone, oxine), lumogallion and 2,2'-dihydroxy-azobenzene (DHAB).

Although there are no particular restrictions on the solvent of the chelating reagent, it is typically water. In addition, it may also contain other additives such as buffer for adjusting the pH or deproteinizing agent.

Furthermore, in the case of measuring by liquid chromatography, the chelating reagent may be present in separate states in a buffer reagent and eluate, or may be present in a state in which the buffer reagent and/or eluate are combined.

Next, an explanation is provided of the method for measuring aluminum in a sample using the chelating reagent as claimed in the present invention. To begin with, there are no particular restrictions on the sample targeted for measurement, and examples of samples include biological samples, foods, beverages, drinking water, pharmaceuticals, reagents, river water, lake water, seawater and soil. This method is particularly effective for measuring aluminum in samples which are suspected of containing trace amounts of aluminum (and especially biological samples and pharmaceuticals).

There are no particular restrictions on the biological samples, examples of which include human or animal blood, serum, plasma, urine, feces, semen, bone marrow fluid, saliva, perspiration, tears, ascites, amniotic fluid, organs such as the brain, hair, skin, nails, muscle, nerves and other tissues and cells.

There are no particular restrictions on foods, examples of which include meat, vegetables, grain, fruits, seafood and processed foods.

There are no particular restrictions on beverages, examples of which include fruit juice, tea, coffee and alcoholic beverages.

There are no particular restrictions on pharmaceuticals, examples of which include transfusions, injections, powders and tablets.

Furthermore, although it is preferable that the sample be in the form of a liquid, in the case it is not a liquid, extraction treatment, solubilization treatment or other pretreatment is preferably performed in accordance with known methods to obtain a liquid sample. In addition, a deproteinizing procedure may be performed on the sample as necessary.

This type of sample and the chelating reagent of the present invention are then mixed. Although there are no particular restrictions on the ratio at which the sample and chelating reagent are mixed, they are mixed so that the concentration of analytical chelating agent in the reaction solution after mixing is not less than 6 times the conventional concentration. For example, in the case of measuring aluminum concentration in human serum or transfusion solution, since human serum is a biological sample while transfusion solution is a pharmaceutical, the aluminum concentration estimated to be contained in the sample is estimated to be 37.06 $\mu$M in accordance with the previously mentioned definitions. Next, 60 mM 8-quinolinol is selected for the reagent to be used. In this case, since aluminum and 8-quinolinol bond at a ratio of 1:3, the equivalent concentration of 8-quinolinol in the chelating reagent is 60 mM x 1000 ÷ 3 ÷ 37.06 $\mu$M ≈ 540 times equivalent concentration. Next, a complex formation reaction is carried out by mixing 50 $\mu$L of the 60 mM 8-quinolinol reagent, 150 $\mu$L of sample and 250 $\mu$L of 3M BES buffer. In this case, the concentration of 8-quinolinol in the reaction solution is (60 mM x 50 $\mu$L) ÷ (50 $\mu$L + 150 $\mu$L + 250 $\mu$L) = 6.67 mM. In addition, the aluminum concentration in the reaction solution is (37.06 $\mu$M x 150 $\mu$L) ÷ (50 $\mu$L + 150 $\mu$L + 250 $\mu$L) = 12.35 $\mu$M. Thus, the concentration of 8-quinolinol in the reaction solution becomes 6.67 mM x 1000 ÷ 3 ÷ 12.35 $\mu$M = 180 times equivalent.

Furthermore, for formation of complex between the aluminum and analytical chelating agent, said sample and the chelating reagent of the present are mixed, and the time and temperature are suitably set at which the complex adequately forms.

Furthermore, other reagents (such as buffer for adjusting the pH or deproteinizing agent) may be mixed with the sample and/or chelating reagent before mixing the sample and chelating reagent, during mixing of the sample and chelating reagent, or after mixing the sample and chelating reagent as necessary.

Next, following formation of complex, measurement of said complex is carried out in accordance with ordinary methods and procedures using chromatography typically used in the field of analytical chemistry, examples of which include high-performance liquid chromatography (HPLC), liquid chromatography using an open column, electrophoresis, and capillary electrophoresis. More specifically, aluminum in a sample is qualitatively or quantitatively measured by causing the complex formed from the analytical chelating agent of the present invention and aluminum, components contained in the sample, components contained in the reagent and so forth to migrate through a stationary phase by a mobile phase (developer), separating them according to differences in the migration rates of each component, and then detecting an optical signal such as absorbance or fluorescent intensity, electrical signal, radiochemical signal or other signal originating in said complex using a detection device or visually.

Examples of chromatography include high-performance liquid chromatography (HPLC), liquid chromatography using an open column, electrophoresis and capillary electrophoresis, with high-performance liquid chromatography (HPLC) being preferable.

For example, in the case of using liquid chromatography, the liquid chromatography column may use for the stationary phase a known reverse-phase chromatography column such as a octadecylsilane (ODS) column, a protein coated ODS column such as the Bioptic AV-1 column (GL Science), a column composed of a carrier having both hydrophilic groups and phenyl groups or other hydrophobic groups such as the Capsule Pack MF ph-1 column (Shiseido) or A1 Dedicated Analytical Column (Shino-Test), or a column having phenyl groups and other hydrophobic groups. In the case of a using a column composed of a carrier having both hydrophilic and hydrophobic groups, or a column composed of a carrier having phenyl groups or other hydrophobic groups in particular, the protein and aluminum contained in the sample can be separated more distinctly, thereby making these columns preferable.

In addition, in the case of electrophoresis or capillary electrophoresis, polyacrylamide gel, agarose gel or other known electrophoresis carriers may be used for the stationary phase.

The composition and migration rate of the mobile phase are suitably selected to have an appropriate composition and migration speed corresponding to the type of stationary phase, volume of stationary phase and method used to detect the separated aluminum and analytical chelating agent complex.

For example, in the case of carrying out measurement using the chelating reagent of the present invention by liquid chromatography using a reverse-phase column, acetonitrile, acetic acid or other organic solvent may be contained in the mobile phase within the range of 0-50%, N,N-bis(2-hydroxyethyl)-2-aminoethanesulfonate (BES), tris (hydroxymethyl)aminomethane or other known buffer may be contained within the range of 0.001-0.5 M and within the range of pH 4.0-9.0, water may be contained within the range of 0-95%, and EDTA or other chelating agent may be contained within the range of 0.01-500 mM, while sodium azide or other antiseptics, other reagents for aluminum detection or counter ions may also be contained in the mobile phase.

In addition, a surfactant may also be contained in the mobile phase. Examples of surfactants that may be used include anionic surfactants, cationic surfactants, amphoteric surfactants and nonionic surfactants. Examples of anionic surfactants include carboxylates, amino acid salts, sulfonates, ester sulfates and ester phosphates. Examples of cationic surfactants include amine salts or quaternary ammonium salts. Examples of amphoteric surfactants include aminocarboxylic acids, carboxybetaine-based surfactants and sulfobetaine-based surfactants. Moreover, examples of nonionic surfactants include polyoxyethylene-based surfactants and polyvalent alcohol-based surfactants.

Equivalent commercially available surfactants may also be used for these surfactants, examples of which include the anionic surfactant, sodium dodecylsulfate (SDS) (Wako Pure Chemical Industries); the nonionic surfactants, Triton X-100 (polyethyleneglycol-mono-p-octylphenylether (n = 10), Tokyo Chemical) and PONPE-20 (Tokyo Chemical); and the cationic surfactant, CA-2330 (Nikko Chemical).

The concentration at which these surfactants are contained in the mobile phase should be suitably determined corresponding to conditions such as resolution and sensitivity.

In addition, the composition of the mobile phase may be changed over time.

The migration rate of the mobile phase is suitably set within the range of, for example, 0.1-10.0 mL/min in the case of performing by high-performance liquid chromatography, or within the range of, for example, 0.01-5.0 mL/min in the case of liquid chromatography using an open column.

In measuring the aluminum in a sample using the chelating reagent of the present invention, as was previously described, aluminum measurement can be carried out qualitatively or quantitatively by detecting a complex of aluminum and analytical chelating agent, which has been separated from free analytical chelating agent and so forth by the above chromatography as previously mentioned, using optical absorbance, fluorescent intensity or other optical signal, electrical signal, radiochemical signal or other signal originating in this complex using a detection device or visually.

Detection of a signal originating in this separated complex of aluminum and analytical chelating agent can be carried out by a detection device installed in the flow path or visually during the time this aluminum and analytical chelating agent complex is present in the flow path of the chromatographic mobile phase.

In addition, this can also be carried out by separating and collecting the mobile phase from the chromatography, and detecting this fraction either by applying to a detection device or detecting visually.

Furthermore, the timing at which the sample containing aluminum and the chelating reagent containing analytical chelating agent are mixed and allowed to react to form a complex between the aluminum and analytical chelating agent may be selected to be either before applying to chromatography or while being applied to chromatography.

In other words, the measurement of aluminum in a sample according to the chelating reagent and measurement method of the present invention may be carried out by a pre-column derivitization method in which the analytical chelating reagent is not contained in the chromatographic mobile phase (eluate, developer), a pre-column derivitization method in which the analytical chelating agent is contained in the chromatographic mobile phase (eluate, developer), an on-column derivitization method or a post-column derivitization method (Iki et al., Dojin News, **48**:3, 1989).

Furthermore, the pre-column derivitization method refers to a method in which the sample and chelating reagent are mixed, the aluminum in the sample and analytical chelating agent in the chelating reagent for aluminum measurement are brought into contact, and forming a complex between the aluminum and analytical chelating agent followed by measuring said complex using chromatography.

There are two types of techniques employed for this pre-column derivitization method consisting of one in which the analytical chelating agent is not contained in the chromatographic mobile phase (eluate, developer) and one in which it is contained.

In addition, the on-column derivitization method refers to a method in which the analytical chelating agent is only contained in the chromatographic mobile phase (eluate, developer) (namely, the eluate and developer serve as chelating reagents), and the aluminum and analytical chelating agent complex is formed while carrying out chromatography, followed by measuring said complex.

Moreover, the post-column derivitization method refers to a method in which a mobile phase (eluate, developer) is used that does not contain the analytical chelating agent, the sample is applied to chromatography without mixing the sample with chelating reagent, and after the aluminum has separated from the other components, it is mixed with a chelating reagent for aluminum measurement to contact with that reagent to form a complex between the aluminum and analytical chelating agent followed by measurement of said complex.

In the measuring of aluminum in a sample according to the chelating reagent and measurement method of the present invention, the case of performing measurement according to the pre-column derivitization method in which analytical chelating agent is not contained in the mobile phase (eluate, developer) of chromatography is particularly preferable.

In the measurement of aluminum in a sample according to the present invention, since the concentration of analytical chelating agent in the reaction solution becomes extremely high, equilibrium shifts considerably in the direction in which a complex is formed between the aluminum and analytical chelating agent, thereby promoting formation of this complex. In addition, the formation of complexes between elements (metals) other than aluminum and the analytical chelating agent are also similarly promoted in accordance with the chelating stability constant.

Here, in the pre-column derivitization method in which analytical chelating agent is not contained in the chromatographic mobile phase, complex formation between the aluminum and analytical chelating agent (as well as the formation of complexes between elements (metals) other than aluminum and the analytical chelating agent) takes place before application to chromatography, and analytical chelating agent is not present in the mobile phase.

Accordingly, during the course of chromatography, a driving force acts in the direction in which all of the above complex formed dissociates in terms of equilibrium theory, and in contrast to complexes between elements (metals) other than aluminum and the analytical chelating agent that have a rapid dissociation rate (kinetically active) dissociating and decreasing, since kinetically inactive complex formed between aluminum and the analytical chelating agent has a slow dissociation rate causing it to decrease slowly, during signal detection, only the signal originating in the complex of aluminum and analytical chelating agent can be strongly detected and measured.

In contrast, in the pre-column derivitization method in which the analytical chelating agent is contained in.the chromatographic mobile phase, the on-column derivitization method or the post-column derivitization method, since the analytical chelating agent is contained in the mobile phase and so forth, in a measurement system that is not affected by substances that inhibit complex formation as in the measurement of aluminum according to the present invention, it is necessary to contain a high concentration of analytical chelating agent in the mobile phase and so forth, and since a high concentration of analytical chelating agent is also present during detection of the signal originating in the complex between aluminum and the analytical chelating agent, complexes also end up forming between elements (metals) other than aluminum having a small chelating stability constant and the analytical chelating agent, and these produce strong signals that result in the risk of impairing measurement of aluminum.

This is particularly disadvantageous in the case of highly sensitive measurement of trace amounts of aluminum.

Accordingly, in the measurement of aluminum in a sample according to the present invention, performing measurement with this pre-column derivitization method in which analytical chelating agent is not contained in the chromatographic mobile phase is particularly preferable, and allows measurements to be performed with high sensitivity.

Furthermore, the pre-column derivitization method in which analytical chelating agent is not contained in the chromatographic mobile phase includes the case in which analytical chelating reagent at a concentration substantially insufficient for carrying out measurement of aluminum is contained in the chromatographic mobile phase. In this case, since the concentration of analytical chelating agent contained in the mobile phase is low, the resulting effect is the same as the case of analytical chelating agent not being contained in the mobile phase.

Qualitative measurement of aluminum in a sample can be carried out by identifying a signal originating in separated aluminum (complex) by first comparing a signal detected in the manner previously described with the retention time or mobility and so forth of the signal of a standard sample containing aluminum.

In addition, in the case of performing quantitative measurement, the quantitative value should be determined by further comparing and calculating the height or area of a signal (peak) originating in this separated aluminum (complex) on a resulting chromatogram with that of a standard sample containing a known concentration of aluminum. In addition, a quantitative value may also be calculated based on the electrical signal from a detection device.

Furthermore, it is desirable that adequate caution be taken so as to prevent contamination by aluminum other than that from the sample that imparts error to the measurement of aluminum contained in the sample during measurement of aluminum in a sample. For example, highly pure reagents that do not contain aluminum as an impurity should be used for the reagents and so forth, the water that is used should be distilled twice for high purity, containers and utensils should be made of synthetic resin and washed with acid prior to use to remove aluminum, and cautions should be taken to prevent contamination by aluminum from the environment.

Examples

Although the following provides a more detailed description of the present invention through its examples, the present invention is not limited in any way by these examples.

Example 1: Chelating Reagent for Measuring Aluminum in a Sample and Measurement of Aluminum Concentration in a Human Serum Sample Using that Reagent

Preparation of Reagent

(1) 10 M Nitric Acid

Nitric acid (ultra-high purity standard, Kanto Chemical) was diluted with distilled water to prepare 10 M nitric acid.

(2) Chelating Reagent

Three types of chelating reagents were prepared from 8-quinolinol (analytical chelating agent, reagent grade, Kanto Chemical) and 30% hydrochloric acid (ultra-high purity standard, Tama Chemical).

Reagent A:
10 mM 8-quinolinol/1 M hydrochloric acid
Reagent B:
200 mM 8-quinolinol/1 M hydrochloric acid
Reagent C:
400 mM 8-quinolinol/1 M hydrochloric acid

(3) Buffer Reagent

A buffer solution (pH 7.5) was prepared containing 2.5 M N,N-bis(2-hydroxyethyl)-2-aminoethanesulfonate (BES, Dojindo, recrystallized reagent grade) containing 10 mM sodium dodecylsulfate (SDS, biochemical use, Wako Pure Chemical Industries) and 0.05% (w/v) Triton X-100 (research use, Nacalai Tesque).

(4) Mobile Phase Solution

A buffer solution (pH 7.0) was prepared containing 20% acetonitrile (ultra-high purity standard, Kokusan Chemical), 1% (w/v) sodium dodecylsulfate (SDS, biochemical use, Wako Pure Chemical Industries) and 0.1 M N,N-bis(2-hydroxyethyl)-2-aminoethanesulfonate (BES) (Dojindo, recrystallized reagent grade).

Preparation of Test Samples

(1) 1 g/L (1,000 ppm, 37.06 mM) of aluminum standard (AlCl$_3$: for atomic absorption analysis, Wako Pure Chemical Industries) was diluted with 0.01 N hydrochloric acid (ultra-high purity standard, Kanto Chemical) to prepare a standard aluminum solution having an aluminum concentration of 250 μg/L (9.265 μM).
(2) Aqueous deferoxamine solutions were prepared at the following concentrations from "Desferal Vials" (trade name, Novartis Pharma) containing 500 mg of deferoxamine per vial, and distilled water.

100 g/L, 10.0 g/L, 5.0 g/L and 1.0 g/L

(3) Aqueous citric acid solutions were prepared at the following concentrations from citric acid and distilled water.

100 g/L, 10.0 g/L, 5.0 g/L and 1.0 g/L

0.1 mL of each of the above concentrations of deferoxamine solution or citric acid solution was added to a mixture of 0.8 mL of human serum and 0.1 mL of the above aluminum solution to prepare 1 mL test samples consisting of the following concentrations of deferoxamine or citric acid. Furthermore, distilled water was added in the case of test samples not containing deferoxamine or citric acid.
Deferoxamine: 10.0 g/L, 1.0 g/L, 0.5 g/L, 0.1 g/L
Citric acid: 10.0 g/L, 1.0 g/L, 0.5 g/L, 0.1 g/L

Measurement of Aluminum Concentration

Test solutions: 20 μL of 10 M nitric acid were added and mixed into 400 μL of serum sample containing each of the concentrations of deferoxamine, citric acid prepared as previously described, followed by centrifugal separation for 5 minutes at 25°C and 10,000 x g to respectively separate the supernatant and sediment. Next, 50 μL of chelating reagent prepared in the above manner were respectively added to 150 μL of the supernatant, followed by the respective addition and mixing of 400 μL of buffer reagent prepared in the above manner. As a result, the aluminum in the test samples and 8-quinolinol were allowed to react resulting in the formation of a complex.

Measurement apparatus: The A1 Dedicated Analytical Column (1.5 mm$\phi$ x 75 mm, Shino-Test) serving as a carrier column having hydrophilic groups and hydrophobic groups on a silica gel substrate was used for the stationary phase, the mobile phase solution prepared in the above manner was used for the mobile phase at a flow rate of 120 $\mu$L/min, and high-performance liquid chromatography was used using the Nanospace Model SI-1/2001 pump (Shiseido), Nanospace Model SI-1/2014 column oven (Shiseido), Nanospace Model SI-1/2009 degasser (Shiseido), Nanospace Model AL3023 auto sampler (Shiseido), Nanospace System Controller and Data Processor (Shiseido) and Model FP-1520S spectrofluorescent detector (installed with a 5 $\mu$L cell, Jasco).

The respective measurements were performed by injecting 10 $\mu$L of the test solutions obtained above. Detection of fluorescent intensity was carried out at an excitation wavelength of 370 nm and radiant wavelength of 504 nm.

Furthermore, the distilled water used in measurement was distilled twice prior to use.

In addition, all utensils and containers used in these measurements were made of a synthetic resin such as Teflon, and were carefully washed with 0.1 M nitric acid and then with double-distilled distilled water prior to use.

Under the above measurement conditions, since the peak retention time of the aluminum and 8-quinolinol complex was confirmed to be about 6.5 minutes, while the peak retention time of free 8-quinolinol was confirmed to be about 3 minutes using a standard substance, the peak area at a retention time of about 6.5 minutes was used as the measured value in each measurement.

Measurement Results

The results of measuring serum samples containing deferoxamine and citric acid are shown in Tables 1 and 2, respectively. The results are shown as the relative ratio (percentage) of the measured value (peak area) of each serum sample based on the measured value (peak area) in the case of not containing deferoxamine or citric acid being 100%.

Table 1

| Deferoxamine g/L | Reagent A % | Reagent B % | Reagent C % |
|---|---|---|---|
|  | 100 | 100 | 100 |
| 0.1 | 84 | 99 | 103 |
| 0.5 | 46 | 98 | 96 |
| 1.0 | 17 | 99 | 99 |
| 10.0 | -19 | 71 | 88 |

Table 2

| Citric acid g/L | Reagent A % | Reagent B % | Reagent C % |
|---|---|---|---|
| 0 | 100 | 100 | 100 |
| 0.1 | 93 | 97 | 97 |
| 0.5 | 35 | 97 | 94 |
| 1.0 | 5 | 100 | 95 |
| 10.0 | -19 | 94 | 90 |

Discussion

Since the test samples contained human serum, they are biological samples. Accordingly, the estimated concentration of aluminum in the samples was taken to be 37.06 $\mu$M. When the estimated concentration of aluminum in the reaction solutions was calculated on the basis of this, it was determined to be 37.06 $\mu$M x 400 ÷ (400 + 20) x 150 ÷ (150 + 50 + 400) = 8.82 $\mu$M. Thus, since the concentrations of 8-quinolinol in the reaction solutions with chelating reagents A, B and C are 0.833 mM, 16.7 mM and 33.4 mM, respectively, the equivalent concentrations of 8-quinolinol in the reaction solutions are 31 times, 631 times and 1262 times, respectively, the equivalent concentration relative to the estimated aluminum concentration in the reaction solutions.

As is clear from Tables 1 and 2, in the case an interfering substance (here, deferoxamine or citric acid) is present in a serum sample, although the equivalent concentration of 8-quinolinol in the reaction solution is unable to be measured accurately at 31 times the equivalent concentration, at 631 and 1262 times the equivalent concentration, it can clearly be measured accurately. In addition, even in cases in which interfering substances are present in large amounts, measurement error clearly becomes smaller if analytical chelating agent is present in large amounts in the chelating reagent.

Example 2: Measurement of Aluminum Content in a General Amino Acid-Xylitol Preparation and High-Calorie Transfusion Solution

Reagent Preparation

(1) Chelating Reagent

Seven types of chelating reagents were prepared from 8-quinolinol (analytical chelating agent, reagent grade, Kanto Chemical) and 30% hydrochloric acid (ultra-high purity standard, Tama Chemical).

Reagent a:
10 mM 8-quinolinol/1 M hydrochloric acid
Reagent b:
20 mM 8-quinolinol/1 M hydrochloric acid
Reagent c:
40 mM 8-quinolinol/1 M hydrochloric acid
Reagent d:
60 mM 8-quinolinol/1 M hydrochloric acid
Reagent e:
80 mM 8-quinolinol/1 M hydrochloric acid
Reagent f:
100 mM 8-quinolinol/1 M hydrochloric acid
Reagent g:
200 mM 8-quinolinol/1 M hydrochloric acid

(2) Buffer Reagent

A buffer solution (pH 7.5) was prepared containing 2.5 M N,N-bis(2-hydroxyethyl)-2-aminoethanesulfonate (BES, Dojindo, recrystallized reagent grade) containing 10 mM sodium dodecylsulfate (SDS, biochemical use, Wako Pure Chemical Industries) and 0.05% (w/v) Triton X-100 (research use, Nacalai Tesque).

(3) Mobile Phase Solution

A buffer solution (pH 7.0) was prepared containing 20% acetonitrile (ultra-high purity standard, Kokusan Chemical), 1% (w/v) sodium dodecylsulfate (SDS, biochemical use, Wako Pure Chemical Industries) and 0.1 M N,N-bis(2-hydroxyethyl)-2-aminoethanesulfonate (BES) (Dojindo, recrystallized reagent grade).

Test Samples

(1) General amino acid-xylitol preparation: A general amino acid-xylitol preparation (transfusion solution) comprised of several types of essential amino acids, several types of non-essential amino acids, xylitol and so forth was used as is for a test sample.
(2) A sugar-amino acid-vitamin $B_2$-electrolyte solution for High-calorie transfusion solution: A sugar-amino acid-vitamin $B_2$-electrolyte solution (transfusion solution) for high-calorie transfusion comprised of several types of essential amino acids, several types of non-essential amino acids, glucose, vitamin $B_2$ and more than ten types of electrolytes and so forth was used as is for a test sample.

Measurement of Aluminum Concentration

Test solutions: 50 µL of one of the chelating reagents prepared above (reagent a, b, c, d, e, f or g) were added to 150 µL of each of the above test samples ((1) or (2)) and allowed to stand for 10 minutes at room temperature.

Subsequently, 400 µL of the buffer solution prepared above were added and mixed with each followed by allowing to stand for 10 minutes at room temperature.

As a result, the aluminum in the test samples and 8-quinolinol were allowed to react and form a complex.

Furthermore, the concentrations of 8-quinolinol in the reaction solutions in the case of each of the above chelating reagents were as indicated below.

Case of reagent a: 0.833 mM
Case of reagent b: 1.67 mM
Case of reagent c: 3.33 mM
Case of. reagent d: 5.00 mM
Case of reagent e: 6.67 mM
Case of reagent f: 8.33 mM
Case of reagent g: 16.70 mM

Measurement apparatus: The A1 Dedicated Analytical Column (4.6 mmφ x 50 mm, Shino-Test) serving as a carrier column having hydrophilic groups and hydrophobic groups on a silica gel substrate was used for the stationary phase, the mobile phase solution prepared in the above manner was used for the mobile phase at a flow rate of 1000 µL/min, and high-performance liquid chromatography was used using the Model DU-980 pump (Jasco), Model CO-1560 column oven (used at set temperature of 25°C, Jasco), Model D9-980-50 degasser (Jasco), Model AS-950 auto injector (Jasco), Model FP-1520S spectrofluorescent detector (installed with a 16 µL cell, Jasco) and an integrator (Jasco).

The respective measurements were performed by injecting 200 µL of the sample solutions obtained above.

Detection of fluorescent intensity was carried out at an excitation wavelength of 370 nm and radiant wavelength of 504 nm.

Furthermore, the above measurements were performed in duplicate by performing the same measurement twice.

In addition, the water used in measurement was ultra-pure water (Tama Chemical).

In addition, all utensils and containers used in these measurements were made of a synthetic resin such as Teflon, and were carefully washed with 0.1 M nitric acid and then with ultra-pure water prior to use.

Under the above measurement conditions, since the peak retention time of the aluminum and 8-quinolinol complex was confirmed to be about 4.6 minutes, while the peak retention time of free 8-quinolinol was confirmed to be about 2.2 minutes using a standard substance, the peak area at a retention time of about 4.6 minutes was used as the measured value in each measurement.

Measurement Results

The measurement results for each of the above test samples ((1) and (2)) are shown in Table 3. The results are shown as the relative ratio (percentage) of the measured value (peak area) of each chelating reagents (reagent a - reagent f) based on the measured value (peak area) in the case of using reagent g (8-quinolinol concentration: 200 mM) for the chelating reagent being 100%. The values are also shown as the values determined by averaging the two measured values in duplicate measurements (average values).

Table 3

| Test sample | Chelating Reagent | | | | | | |
|---|---|---|---|---|---|---|---|
| | Reagent a | Reagent b | Reagent c | Reagent d | Reagent e | Reagent f | Reagent g |
| | % | % | % | % | % | % | % |
| (1) | 18 | 64 | 93 | 103 | 101 | 107 | (100) |
| (2) | 30 | 70 | 93 | 98 | 102 | 102 | (100) |

Discussion

The test samples are transfusion solution, namely pharmaceuticals. Accordingly, the estimated concentration of aluminum in the samples was taken to be 37.06 µM. When the estimated concentration of aluminum in the reaction solutions was calculated on the basis of this, it was determined to be 37.06 µM x 150 ÷ (150 + 50 + 400) = 9.265 µM.

In addition, the concentration of 8-quinolinol in the reaction solutions was as respectively indicated above for the case of each chelating reagent.

Thus, the equivalent concentrations of 8-quinolinol in the reaction solutions with respect to the estimated concentration of aluminum contained in the reaction solutions were as shown below in the case of using each of the chelating reagents.

Case of reagent a: 30 times equivalent
Case of reagent b: 60 times equivalent
Case of reagent c: 120 times equivalent
Case of reagent d: 180 times equivalent
Case of reagent e: 240 times equivalent
Case of reagent f: 300 times equivalent
Case of reagent g: 601 times equivalent

As is clear from Table 3, in the case the equivalent concentration of 8-quinolinol in the reaction solution was 120 times or less equivalent for reagents a through c in test sample (1) (general amino acid-xylitol preparation) and test sample (2) (sugar, amino acid, vitamin $B_2$ and electrolyte solution for high-calorie transfusion), the measured values of aluminum concentration were lower than in the case of not less than 180 times equivalent (reagents d through g), thus indicating the occurrence of negative error.

Namely, it is surmised an interfering substance that consumes analytical chelating agent or a substance that inhibits the formation of complex by forming a chelate with the aluminum is contained in the large amounts in the above test samples (1) and (2) that causes error in the measurement of aluminum concentration.

However, in the case the equivalent concentration of 8-quinolinol in the reaction solution is not less than 180 times equivalent (reagents d through g), there is no occurrence of error and aluminum concentration can be measured accurately even in samples containing a substance that has an interfering effect on measurement of aluminum concentration as mentioned above.

Namely, in the case the equivalent concentration of 8-quinolinol in the reaction solution is not less than 180 times equivalent, even if the sample is a pharmaceutical such as a transfusion solution that contains substances that interfere with measurement, it is clear that the concentration of aluminum contained in this pharmaceutical can be measured accurately.

Furthermore, in the case the analytical chelating agent is 8-quinolinol, the conventional concentration of analytical chelating agent in the reaction solution is 30 times the equivalent concentration of aluminum estimated to be contained in the reaction solution. Accordingly, in the case the equivalent concentration is 180 times equivalent, this means that it is six times the conventional concentration.

Thus, in the case of forming a complex between aluminum in a sample and analytical chelating agent under conditions in which the equivalent concentration of the analytical chelating agent in the reaction solution is not less than 6 times the conventional concentration, even if interfering substances that consume the analytical chelating agent or substances that interfere with the formation of complex by forming a chelate with the aluminum are present, the concentration of aluminum in the sample was confirmed to be able to be measured accurately without error.

Example 3: Chelating Reagent for Measuring Aluminum Concentration in a Sample and Measurement of Aluminum Content in Transfusion Solution Using that Reagent

Reagent Preparation

(1) Chelating Reagent

Three types of chelating reagents were prepared from 8-quinolinol (analytical chelating agent, reagent grade, Kanto Chemical) and 30% hydrochloric acid (ultra-high purity standard, Tama Chemical).

Reagent D:
10 mM 8-quinolinol/1 M hydrochloric acid
Reagent E:
100 mM 8-quinolinol/1 M hydrochloric acid
Reagent F:
200 mM 8-quinolinol/1 M hydrochloric acid

(2) Buffer Reagent

A buffer solution (pH 7.5) was prepared containing 2.5 M N,N-bis(2-hydroxyethyl)-2-aminoethanesulfonate (BES, Dojindo, recrystallized reagent grade) containing 10 mM sodium dodecylsulfate (SDS, biochemical use, Wako Pure Chemical Industries) and 0.05% (w/v) Triton X-100 (research use, Nacalai Tesque).

(3) Mobile Phase Solution

A buffer solution (pH 7.0) was prepared containing 20% acetonitrile (ultra-high purity standard, Kokusan Chemical), 1% (w/v) sodium dodecylsulfate (SDS, biochemical use, Wako Pure Chemical Industries) and 0.1 M N,N-bis(2-hydroxyethyl)-2-aminoethanesulfonate (BES) (Dojindo, recrystallized reagent grade).

Diluent and Aluminum Solutions

(1) Diluent: 12 M nitric acid (ultra-high purity standard, Tama Chemical) was diluted with ultra-pure water (Tama Chemical) to prepare 100 mM nitric acid.
(2) 10 mg/L Aluminum Solution: 1 g/L (1,000 ppm, 37.06 mM) aluminum standard ($AlCl_3$, for atomic absorption analysis, Kanto Chemical) was diluted 100-fold with the above diluent using a 100 mL Teflon volumetric flask to prepare an aluminum solution having a concentration of 10.00 mg/L (370.6 $\mu$M).
(3) 5 mg/L Aluminum Solution: The above 10 mg/L aluminum solution was diluted two-fold with the above diluent using a 15 mL Sumiron tube (Sumitomo Bakelite) to prepare an aluminum solution having an aluminum concentration of 5.000 mg/L (185.3 $\mu$M).
(4) 1 mg/L Aluminum Solution: The above 5 mg/L aluminum solution was diluted five-fold with the above diluent using a 15 mL Sumiron tube (Sumitomo Bakelite) to prepare an aluminum solution having an aluminum concentration of 1.000 mg/L (37.06 $\mu$M).

Test Samples

(1) General amino acid-xylitol preparation: 20 $\mu$L of the above diluent, the 5 mg/L aluminum solution or the 1 mg/L aluminum solution were added to 1,980 $\mu$L of a general amino acid-xylitol preparation (transfusion solution) comprised of several types of essential amino acids, several types of non-essential amino acids, xylitol and so forth to prepare three types of test samples to which the following concentrations of aluminum were added (or not added).
    General amino acid-xylitol preparation (added aluminum concentration: 0 $\mu$g/L)
    General amino acid-xylitol preparation (added aluminum concentration: 10 $\mu$g/L)
    General amino acid-xylitol preparation (added aluminum concentration: 50 $\mu$g/L)
(2) Sugar-amino Acid-vitamin $B_2$-electrolyte solution for high-calorie transfusion: 20 $\mu$L of the above diluent, the 5 mg/L aluminum solution or the 1 mg/L aluminum solution were added to 1,980 $\mu$L of a sugar-amino acid-vitamin $B_2$-electrolyte solution (transfusion solution) for high-calorie transfusion comprised of several types of essential amino acids, several types of non-essential amino acids, glucose, vitamin $B_2$ and more than ten types of electrolytes and so forth to prepare three types of test samples to which the following concentrations of aluminum were added (or not added).
    Sugar-amino acid-vitamin $B_2$-electrolyte solution for high-calorie transfusion (added aluminum concentration: 0 $\mu$g/L)
    Sugar-amino acid-vitamin $B_2$-electrolyte solution for high-calorie transfusion (added aluminum concentration: 10 $\mu$g/L)
    Sugar-amino acid-vitamin $B_2$-electrolyte solution for high-calorie transfusion (added aluminum concentration: 50 $\mu$g/L)
(3) Aqueous nitric acid solution: 20 $\mu$L of the above diluent, the 5 mg/L aluminum solution or the 1 mg/L aluminum solution were added to 1,980 $\mu$L of the above diluent (100 mM nitric acid) to prepare three types of test samples for use as controls to which the following concentrations of aluminum were added (or not added).
    Aqueous nitric acid solution (added aluminum concentration: 0 $\mu$g/L)
    Aqueous nitric acid solution (added aluminum concentration: 10 $\mu$g/L)
    Aqueous nitric acid solution (added aluminum concentration: 50 $\mu$g/L)

Measurement of Aluminum Concentration

Test solutions: 50 $\mu$L of the prepared chelating reagents described above (reagents D, E and F) were added to 150 $\mu$L of each of the total of nine types of test samples described above, and allowed to stand for 10 minutes at room temperature.

Subsequently, 400 μL of the buffer reagent prepared as described above were added and mixed with each test sample and allowed to stand for 10 minutes at room temperature.

As a result, the aluminum in the test samples and 8-quinolinol reacted and formed a complex.

Furthermore, the concentrations of 8-quinolinol in the reaction solutions were as indicated below in the case of each of the above chelating reagents.

Reagent D: 0.833 mM
Reagent E: 8.33 mM
Reagent F: 16.70 mM

Measurement apparatus: The A1 Dedicated Analytical Column (4.6 mmφ x 50 mm, Shino-Test) serving as a carrier column having hydrophilic groups and hydrophobic groups on a silica gel substrate was used for the stationary phase, the mobile phase solution prepared in the above manner was used for the mobile phase at a flow rate of 1,000 μL/min, and high-performance liquid chromatography was used using the Model LC:10Ai pump (Shimadzu), Model CTO-10Acvp column oven (set to 25°C, Shimadzu), Model DGU-12A degasser (Shimadzu), Model SIL-10Advp auto injector (Shimadzu), Model RF-10AXL spectrofluorescent detector (installed with a 12 μL cell) and Model CLASS-VP integrator (Shimadzu).

The respective measurements were performed by injecting 200 μL of the test solutions obtained above.

Detection of fluorescent intensity was carried out at an excitation wavelength of 370 nm and radiant wavelength of 504 nm.

Furthermore, the above measurements were performed in triplicate by repeating the same measurement three times.

In addition, the water used in measurement was ultra-pure water (Tama Chemical).

All utensils and containers used in these measurements were made of a synthetic resin such as Teflon, and were carefully washed with 0.1 M nitric acid and then with ultra-pure water prior to use.

Under the above measurement conditions, since the peak retention time of the aluminum and 8-quinolinol complex was confirmed to be about 4.6 minutes, while the peak retention time of free 8-quinolinol was confirmed to be about 2.4 minutes using a standard substance, the peak area at a retention time of about 4.6 minutes was used as the measured value in each measurement.

Measurement Results

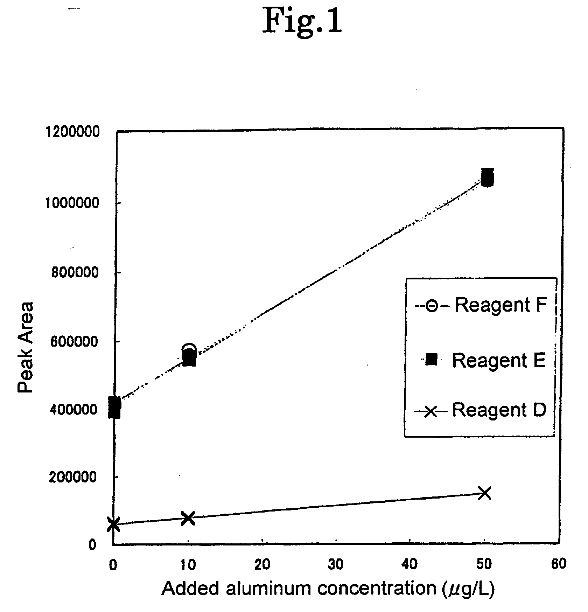

The results of measuring each of the above test samples using each chelating reagent are shown in Figs. 1 through 3.

To begin with, measurement results in the case of the test sample being a general amino acid-xylitol preparation (added aluminum concentration: 0 μg/L, 10 μg/L or 50 μg/L) are shown in Fig. 1.

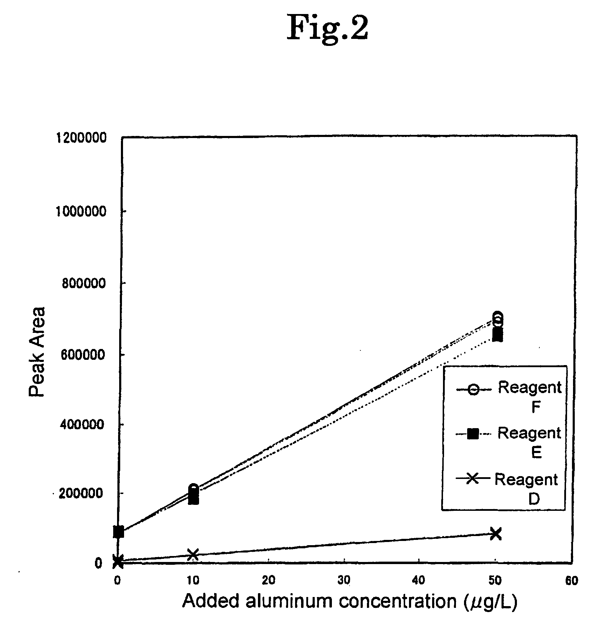

Next, measurement results in the case of the test sample being a sugar-amino acid-vitamin B$_2$-electrolyte solution for high-calorie transfusion (added aluminum concentration: 0 μg/L, 10 μg/L or 50 μg/L) are shown in Fig. 2.

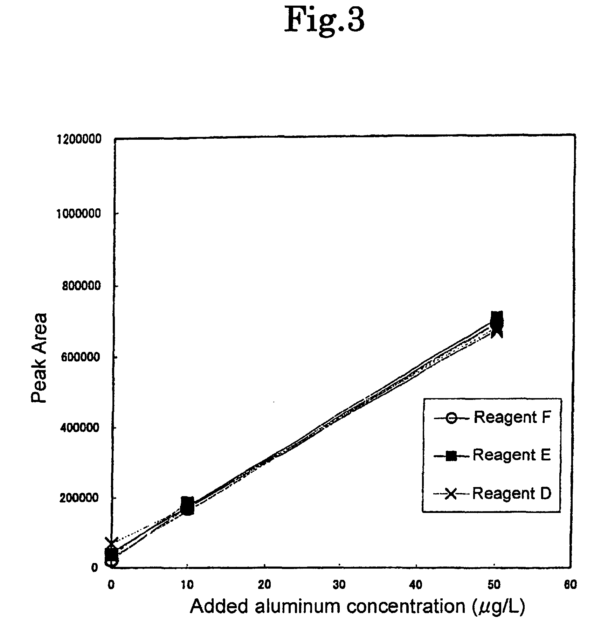

Finally, measurement results in the case of the test sample being an aqueous nitric acid solution (added aluminum concentration: 0 μg/L, 10 μg/L or 50 μg/L) are shown in Fig. 3.

Furthermore, in these graphs, the concentration of aluminum(μg/L) added to each test sample is plotted on the horizontal axis, while measured values (peak area) are plotted on the vertical axis.

In these graphs, those points indicated with an " " are measured values (peak area) in the case of using reagent D (8-quinolinol concentration: 10 mM), those points indicated with a " " are measured values (peak area) in the case of using reagent E (8-quinolinol concentration: 100 mM), while those points indicated with a "○" are measured values (peak area) in the case of using reagent F (8-quinolinol concentration: 200 mM).

Furthermore, the three measured values in triplicate measurements are respectively shown in the graphs.

Discussion

The test samples are transfusion solution, namely pharmaceuticals. Accordingly, the estimated concentration of aluminum in the samples was taken to be 37.06 μM. When the estimated concentration of aluminum in the reaction solutions was calculated on the basis of this, it was determined to be 37.06 μM x 150 ÷ (150 + 50 + 400) = 9.265 μM.

In addition, the concentration of 8-quinolinol in the reaction solutions was as respectively indicated above for the case of each chelating reagent.

Thus, the equivalent concentrations of 8-quinolinol in the reaction solutions with respect to the estimated concentration of aluminum contained in the reaction solutions were as shown below in the case of using each of the chelating reagents.

Case of reagent D: 30 times equivalent
Case of reagent E: 300 times equivalent

Case of reagent F: 601 times equivalent

To begin with, according to Fig. 3, in the case the test sample is aqueous nitric acid solution, the measured values (peak areas) at each concentration of added aluminum can be seen to the same regardless of which of reagents D (30 times equivalent), E (300 times equivalent) or F (601 times equivalent) were used. Each measured value can also be seen to lie on a straight line, and the aluminum in the samples can be measured accurately and precisely.

In contrast, according to Figs. 1 and 2, in the case the test sample was an amino acid-xylitol preparation or a sugar-amino acid-vitamin $B_2$-electrolyte solution for high-calorie transfusion, and reagent E (300 times equivalent) or reagent F (601 times equivalent) was used, the measured values (peak areas) at each of the added aluminum concentrations can be seen to be the same, each of the measured values lies on a straight line, and aluminum in the samples can be measured accurately and precisely.

However, in the case of using reagent D (30 times equivalent), the measured values (peak areas) were remarkably lower than the measured values of reagent E or reagent F, and a negative error can be seen to have occurred.

Namely, on the basis of this finding as well, an interfering substance that consumes the analytical chelating agent or a substance that inhibits formation of a complex by forming a chelate with the aluminum, which causes error in the measurement of aluminum concentration, is surmised to be contained in large amounts in the amino acid-xylitol preparation and sugar-amino acid-vitamin $B_2$-electrolyte solution for high-calorie transfusion.

It can also be seen that in the case of the equivalent concentration of 8-quinolinol in the reaction solution being 300 times equivalent (reagent E) or 601 times equivalent (reagent F), there is no occurrence of error and aluminum can be measured accurately even if substances that interfere with measurement of aluminum concentration as mentioned above are contained in the sample.

Furthermore, in the case the analytical chelating agent is 8-quinolinol, since the conventional concentration of analytical chelating agent in the reaction solution is 30 times the equivalent concentration of aluminum estimated to be contained in the reaction solution, in the above case in which the equivalent concentration of 8-quinolinol in the reaction solution is 300 times equivalent or 601 times equivalent, this means that it is 10 times and 20 times, respectively, the conventional concentration.

Effect of the Invention

By using the chelating reagent and measurement method of the present invention, the aluminum concentration in a sample can be measured accurately not only in the case, for example, iron ions, copper ions or zinc ions that consume the analytical chelating agent are present in the sample, but also in the case substances that inhibit complex formation such as deferoxamine, citric acid, or fluorine, which form a chelate with aluminum, are present in the sample.

**Claims**

1. A chelating reagent for aluminum measurement that contains an analytical chelating agent, used in a method for measuring an aluminum content in a sample by forming a complex between the aluminum in the sample and the analytical chelating agent under conditions in which the equivalent concentration of the analytical chelating agent in the reaction solution is not less than 6 times the conventional concentration, and detecting that complex by chromatography.

2. A chelating reagent for aluminum measurement according to claim 1, wherein a complex is formed between the aluminum in the sample and the analytical chelating agent under conditions in which the equivalent concentration of the analytical chelating agent in the reaction solution is not less than 10 times the conventional concentration.

3. A chelating reagent for aluminum measurement according to claim 1 or 2, wherein the analytical chelating agent is 8-quinolinol, said conventional concentration is 30 times the equivalent concentration of the aluminum concentration estimated to be contained in the reaction solution, and the concentration of the analytical chelating agent in said chelating reagent is not less than 540 times the equivalent concentration of the aluminum concentration estimated to be contained in the sample.

4. A chelating reagent for aluminum measurement of according to claim 3, wherein the concentration of the analytical chelating agent in said chelating reagent is not less than 900 times the equivalent concentration of the aluminum concentration estimated to be contained in the sample.

5. A chelating reagent for aluminum measurement of invention according to claim 1 or 2, wherein the analytical chelating agent is lumogallion, said conventional concentration is 40 times the equivalent concentration of the aluminum concentration estimated to be contained in the reaction solution, and the concentration of the analytical chelating agent in said chelating reagent is not less than 486 times the equivalent concentration of the aluminum concentration estimated to be contained in the sample.

6. A chelating reagent for aluminum measurement of invention according to claim 5, wherein the concentration of the analytical chelating agent in said chelating reagent is not less than 810 times the equivalent concentration of the aluminum concentration estimated to be contained in the sample.

7. A chelating reagent for aluminum measurement of invention according to claim 1 or 2, wherein the analytical chelating agent is 2,2'-di-hydroxy-azobenzene, said conventional concentration is 15 times the equivalent concentration of the aluminum concentration estimated to be contained in the reaction solution, and the concentration of the analytical chelating agent present in said chelating reagent is not less than 81 times the equivalent concentration of the aluminum concentration estimated to be contained in the sample.

8. A chelating reagent for aluminum measurement of invention according to claim 7, wherein the concentration of the analytical chelating agent in said chelating reagent is not less than 135 times the equivalent concentration of the aluminum concentration estimated to be contained in the sample.

9. A chelating reagent for aluminum measurement according to any of claims 1 through 8, wherein the chromatography is in accordance with the pre-column derivitization method in which the chromatographic mobile phase does not contain analytical chelating agent.

10. A kit for measuring aluminum comprised of any of the chelating reagents according to claims 1 through 9, a buffer and a chromatographic eluate (mobile phase).

11. A chelating reagent for aluminum measurement that contains an analytical chelating agent, used in a method for measuring an aluminum content in a sample by forming a complex between the aluminum in the sample and the analytical chelating agent under conditions in which the equivalent concentration of the analytical chelating agent in the reaction solution is not less than 243 times the aluminum concentration estimated to be contained in the reaction solution, and detecting that complex by chromatography.

12. A chelating reagent for aluminum measurement according to claim 11, wherein a complex between the aluminum in the sample and the analytical chelating agent is formed under conditions in which the equivalent concentration of the analytical chelating agent in the reaction solution is not less than 400 times the aluminum concentration estimated to be contained in the reaction solution.

13. A chelating reagent for aluminum measurement that contains 8-quinolinol as analytical chelating agent used in a method for measuring the aluminum content in a sample by forming a complex between the aluminum in the sample and the 8-quinolinol under conditions in which the equivalent concentration of 8-quinolinol in the reaction solution is not less than 180 times the aluminum concentration estimated to be contained in the reaction solution, and detecting the complex by chromatography.

14. A chelating reagent for aluminum measurement of invention according to claim 13, wherein a complex is formed between the aluminum in the sample and the analytical chelating agent under conditions in which the equivalent concentration of 8-quinolinol in the reaction solution is not less than 300 times the aluminum concentration estimated to be contained in the reaction solution.

15. A chelating reagent for aluminum measurement that contains lumogallion as analytical chelating agent used in a method for measuring an aluminum content in a sample by forming a complex between the aluminum in the sample and the lumogallion under conditions in which the equivalent concentration of lumogallion in the reaction solution is not less than 243 times the aluminum concentration estimated to be contained in the reaction solution, and detecting the complex by chromatography.

16. A chelating reagent for aluminum measurement according to claim 15, wherein a complex is formed between the aluminum in the sample and the analytical chelating agent under conditions in which the equivalent concentration of lumogallion in the reaction solution is not less than 400 times the aluminum concentration estimated to be contained in the reaction solution.

17. A chelating reagent for aluminum measurement that contains 2,2'-dihydroxy-azobenzene as analytical chelating agent using a method for measuring an aluminum content in a sample by forming a complex between the aluminum in the sample and the 2,2'-dihydroxy-azobenzene under conditions in which the equivalent concentration of 2,2'-dihydroxy-azobenzene in the reaction solution is not less than 88 times the aluminum concentration estimated to be contained in the reaction solution, and detecting the complex by chromatography.

18. A chelating reagent for aluminum measurement according to claim 17, wherein a complex is formed between the aluminum in the sample and the analytical chelating agent under conditions in which the equivalent concentration of 2,2'-dihydroxy-azobenzene in the reaction solution is not less than 150 times the aluminum concentration estimated to be contained in the reaction solution.

19. A chelating reagent for aluminum measurement that contains an analytical chelating agent, used in a method for measuring an aluminum content in a sample by forming a complex between the aluminum in the sample and the analytical chelating agent under conditions in which the concentration of analytical chelating agent in the reaction solution is not less than 6.67 mM, and detecting the complex by chromatography.

20. A chelating reagent for aluminum measurement according to claim 19, wherein a complex is formed between the aluminum in the sample and the analytical chelating agent under conditions in which the concentration of analytical chelating agent in the reaction solution is not less than 12 mM.

21. A chelating reagent for aluminum measurement that contains 8-quinolinol as analytical chelating agent using a method for measuring an aluminum content in a sample by forming a complex between the aluminum in the sample and the 8-quinolinol under conditions in which the concentration of 8-quinolinol in the reaction solution is not less than 6.67 mM, and detecting the complex by chromatography.

22. A chelating reagent for aluminum measurement according to claim 21, wherein a complex is formed between the aluminum in the sample and the analytical chelating agent under conditions in which the concentration of the 8-quinolinol in the reaction solution is not less than 12 mM.

23. A chelating reagent for aluminum measurement that contains lumogallion as analytical chelating agent using a method for measuring an aluminum content in a sample by forming a complex between the aluminum in the sample and the lumogallion under conditions in which the concentration of lumogallion in the reaction solution is not less than 0.9 mM, and detecting the complex by chromatography.

24. A chelating reagent for aluminum measurement according to claim 23, wherein a complex is formed between the aluminum in the sample and the analytical chelating agent under conditions in which the concentration of lumogallion in the reaction solution is not less than 1.5 mM.

25. A chelating reagent for aluminum measurement that contains 2,2'-dihydroxy-azobenzene as analytical chelating agent using a method for measuring an aluminum content in a sample by forming a complex between the aluminum present in the sample and the 2,2'-dihydroxy-azobenzene under conditions in which the concentration of 2,2'-dihydroxy-azobenzene in the reaction solution is not less than 0.6 mM, and detecting the complex by chromatography.

26. A chelating reagent for aluminum measurement according to claim 25, wherein a complex is formed between the aluminum in the sample and the analytical chelating agent under conditions in which the concentration of 2,2'-dihydroxy-azobenzene in the reaction solution is not less than 1 mM.

27. A chelating reagent for aluminum measurement according to any of claims 11 through 26, wherein the chromatography is in accordance with the pre-column derivitization method in which the chromatographic mobile phase does not contain analytical chelating agent.

28. A method for measuring an aluminum content in a sample by forming a complex between the aluminum in the sample and an analytical chelating agent under conditions in which the equivalent concentration of the analytical chelating agent in the reaction solution is not less than 6 times the conventional concentration, and detecting the complex by chromatography.

29. A method for measuring an aluminum content in a sample according to claim 28, wherein a complex is formed between the aluminum in the sample and the analytical chelating agent under conditions in which the equivalent concentration of the analytical chelating agent in the reaction solution is not less than 10 times the conventional concentration.

**30.** A method for measuring an aluminum content in a sample by forming a complex between the aluminum in the sample and an analytical chelating agent under conditions in which the equivalent concentration of the analytical chelating agent in the reaction solution is not less than 243 times the aluminum concentration estimated to be contained in the reaction solution, and detecting the complex by chromatography.

**31.** A method for measuring the aluminum content in a sample according to claim 30, wherein a complex is formed between the aluminum in the sample and the analytical chelating agent under conditions in which the equivalent concentration of the analytical chelating agent in the reaction solution is not less than 400 times the aluminum concentration estimated to be contained in the reaction solution.

**32.** A method for measuring an aluminum content in a sample that uses 8-quinolinol as an analytical chelating agent by forming a complex between the aluminum in the sample and 8-quinolinol under conditions in which the equivalent concentration of the 8-quinolinol in the reaction solution is not less than 180 times the aluminum concentration estimated to be contained in the reaction solution, and detecting the complex by chromatography.

**33.** A method for measuring the aluminum content in a sample according to claim 32, wherein a complex is formed between the aluminum in the sample and the analytical chelating agent under conditions in which the equivalent concentration of 8-quinolinol in the reaction solution is not less than 300 times the aluminum concentration estimated to be contained in the reaction solution.

**34.** A method for measuring an aluminum content in a sample that uses lumogallion as an analytical chelating agent by forming a complex between the aluminum in the sample and the lumogallion under conditions in which the equivalent concentration of lumogallion in the reaction solution is not less than 243 times the aluminum concentration estimated to be contained in the reaction solution, and detecting the complex by chromatography.

**35.** A method for measuring the aluminum content in a sample according to claim 34, wherein a complex is formed between the aluminum in the sample and the analytical chelating agent under conditions in which the equivalent concentration of lumogallion in the reaction solution is not less than 400 times the aluminum concentration estimated to be contained in the reaction solution.

**36.** A method for measuring an aluminum content in a sample that uses 2,2'-dihydroxy-azobenzene as an analytical chelating agent by forming a complex between the aluminum in the sample and the 2,2'-dihydroxy-azobenzene under conditions in which the equivalent concentration of 2,2'-dihydroxy-azobenzene in the reaction solution is not less than 88 times the aluminum concentration estimated to be contained in the reaction solution, and detecting the complex by chromatography.

**37.** A method for measuring the aluminum content in a sample according to claim 36, wherein a complex is formed between the aluminum in the sample and the analytical chelating agent under conditions in which the equivalent concentration of the 2,2'-dihydroxy-azobenzene in the reaction solution is not less than 150 times the aluminum concentration estimated to be contained in the reaction solution.

**38.** A method for measuring an aluminum content in a sample by forming a complex between the aluminum present in the sample and an analytical chelating agent under conditions in which the concentration of the analytical chelating agent in the reaction solution is not less than 6.67 mM, and detecting the complex by chromatography.

**39.** A method for measuring the aluminum content in a sample according to claim 38, wherein a complex is formed between the aluminum in the sample and the analytical chelating agent under conditions in which the concentration of the analytical chelating agent in the reaction solution is not less than 12 mM.

**40.** A method for measuring an aluminum content in a sample that contains 8-quinolinol as analytical chelating agent by forming a complex between the aluminum in the sample and the 8-quinolinol under conditions in which the concentration of 8-quinolinol in the reaction solution is not less than 6.67 mM, and detecting the complex by chromatography.

**41.** A method for measuring the aluminum content in a sample according to claim 40, wherein a complex is formed between the aluminum in the sample and the analytical chelating agent under conditions in which the concentration of the 8-quinolinol in the reaction solution is not less than 12 mM.

**42.** A method for measuring an aluminum content in a sample that contains lumogallion as analytical chelating agent by forming a complex between the aluminum in the sample and the lumogallion under conditions in which the concentration of lumogallion in the reaction solution is not less than 0.9 mM, and detecting the complex by chromatography.

**43.** A method for measuring the aluminum content in a sample according to claim 42, wherein a complex is formed between the aluminum in the sample and the analytical chelating agent under conditions in which the concentration of lumogallion in the reaction solution is not less than 1.5 mM.

**44.** A method for measuring an aluminum content in a sample that uses 2,2'-dihydroxy-azobenzene as analytical chelating agent by forming a complex between the aluminum in the sample and the 2,2'-dihydroxy-azobenzene under conditions in which the concentration of 2,2'-dihydroxy-azobenzene in the reaction solution is not less than 0.6 mM, and detecting the complex by chromatography.

**45.** A method for measuring the aluminum content in a sample according to claim 44, wherein a complex is formed between the aluminum in the sample and the analytical chelating agent under conditions in which the concentration of the 2,2'-dihydroxy-azobenzene in the reaction solution is not less than 1 mM.

**46.** A method for measuring the aluminum content in a sample according to any of claims 28 through 45, wherein the chromatography is in accordance with the pre-column derivitization method in which the chromatographic mobile phase does not contain analytical chelating agent.

**Amended claims in accordance with Rule 86(2) EPC.**

**1.** A chelating reagent for aluminum measurement that contains an analytical chelating agent, used in a method for measuring an aluminum content in a sample by forming a complex between the aluminum in the sample and the analytical chelating agent under conditions in which the equivalent concentration of the analytical chelating agent in the reaction solution is not less than 6 times the conventional concentration, and detecting that complex by chromatography.

**2.** A chelating reagent for aluminum measurement according to claim 1, wherein a complex is formed between the aluminum in the sample and the analytical chelating agent under conditions in which the equivalent concentration of the analytical chelating agent in the reaction solution is not less than 10 times the conventional concentration.

**3.** A chelating reagent for aluminum measurement according to claim 1 or 2, wherein the analytical chelating agent is 8-quinolinol, said conventional concentration is 30 times the equivalent concentration of the aluminum concentration estimated to be contained in the reaction solution, and the concentration of the analytical chelating agent in said chelating reagent is not less than 540 times, preferably not less than 900 times, the equivalent concentration of the aluminum concentration estimated to be contained in the sample.

**4.** A chelating reagent for aluminum measurement of invention according to claim 1 or 2, wherein the analytical chelating agent is lumogallion, said conventional concentration is 40 times the equivalent concentration of the aluminum concentration estimated to be contained in the reaction solution, and the concentration of the analytical chelating agent in said chelating reagent is not less than 486 times, preferably not less than 810 times, the equivalent concentration of the aluminum concentration estimated to be contained in the sample.

**5.** A chelating reagent for aluminum measurement of invention according to claim 1 or 2, wherein the analytical chelating agent is 2,2'-di-hydroxy-azobenzene, said conventional concentration is 15 times the equivalent concentration of the aluminum concentration estimated to be contained in the reaction solution, and the concentration of the analytical chelating agent present in said chelating reagent is not less than 81 times, preferably not less than 135 times, the equivalent concentration of the aluminum concentration estimated to be contained in the sample.

**6.** A chelating reagent for aluminum measurement according to any of claims 1 through 5, wherein the chromatography is in accordance with the pre-column derivitization method in which the chromatographic mobile phase does not contain analytical chelating agent.

**7.** A kit for measuring aluminum comprised of any of the chelating reagents according to claims 1 through 6, a buffer and a chromatographic eluate (mobile phase).

**8.** A chelating reagent for aluminum measurement that contains an analytical chelating agent, used in a method for measuring an aluminum content in a sample by forming a complex between the aluminum in the sample and the analytical chelating agent under conditions in which the equivalent concentration of the analytical chelating agent in the reaction solution is not less than 243 times, preferably not less than 400 times, the aluminum concentration estimated to be contained in the reaction solution, and detecting that complex by chromatography.

**9.** A chelating reagent for aluminum measurement that contains 8-quinolinol as analytical chelating agent used in a method for measuring the aluminum content in a sample by forming a complex between the aluminum in the sample and the 8-quinolinol under conditions in which the equivalent concentration of 8-quinolinol in the reaction solution is not less than 180 times, preferably not less than 300 times, the aluminum concentration estimated to be contained in the reaction solution, and detecting the complex by chromatography.

**10.** A chelating reagent for aluminum measurement that contains lumogallion as analytical chelating agent used in a method for measuring an aluminum content in a sample by forming a complex between the aluminum in the sample and the lumogallion under conditions in which the equivalent concentration of lumogallion in the reaction solution is not less than 243 times, preferably not less than 400 times, the aluminum concentration estimated to be contained in the reaction solution, and detecting the complex by chromatography.

**11.** A chelating reagent for aluminum measurement that contains 2,2'-dihydroxy-azobenzene as analytical chelating agent using a method for measuring an aluminum content in a sample by forming a complex between the aluminum in the sample and the 2,2'-dihydroxy-azobenzene under conditions in which the equivalent concentration of 2,2'-dihydroxy-azobenzene in the reaction solution is not less than 88 times, preferably not less than 150 times, the aluminum concentration estimated to be contained in the reaction solution, and detecting the complex by chromatography.

**12.** A chelating reagent for aluminum measurement that contains an analytical chelating agent, used in a method for measuring an aluminum content in a sample by forming a complex between the aluminum in the sample and the analytical chelating agent under conditions in which the concentration of analytical chelating agent in the reaction solution is not less than 6.67 mM, preferably not less than 12 mM, and detecting the complex by chromatography.

**13.** A chelating reagent for aluminum measurement that contains 8-quinolinol as analytical chelating agent using a method for measuring an aluminum content in a sample by forming a complex between the aluminum in the sample and the 8-quinolinol under conditions in which the concentration of 8-quinolinol in the reaction solution is not less than 6.67 mM, preferably not less than 12 mM, and detecting the complex by chromatography.

**14.** A chelating reagent for aluminum measurement that contains lumogallion as analytical chelating agent using a method for measuring an aluminum content in a sample by forming a complex between the aluminum in the sample and the lumogallion under conditions in which the concentration of lumogallion in the reaction solution is not less than 0.9 mM, preferably not less than 1,5 mM, and detecting the complex by chromatography.

**15.** A chelating reagent for aluminum measurement that contains 2,2'-dihydroxy-azobenzene as analytical chelating agent using a method for measuring an aluminum content in a sample by forming a complex between the aluminum present in the sample and the 2,2'-dihydroxy-azobenzene under conditions in which the concentration of 2,2'-dihydroxy-azobenzene in the reaction solution is not less than 0.6 mM, preferably not less than 1 mM, and detecting the complex by chromatography.

**16.** A chelating reagent for aluminum measurement according to any of claims 8 through 15, wherein the chromatography is in accordance with the pre-column derivitization method in which the chromatographic mobile phase does not contain analytical chelating agent.

**17.** A method for measuring an aluminum content in a sample by forming a complex between the aluminum in the sample and an analytical chelating agent under conditions in which the equivalent concentration of the analytical chelating agent in the reaction solution is not less than 6 times, preferably not less than 10 times, the conventional concentration, and detecting the complex by chromatography.

**18.** A method for measuring an aluminum content in a sample by forming a complex between the aluminum in the sample and an analytical chelating agent under conditions in which the equivalent concentration of the analytical chelating agent in the reaction solution is not less than 243 times, preferably not less than 400 times, the aluminum concentration estimated to be contained in the reaction solution, and detecting the complex by chromatography.

**19.** A method for measuring an aluminum content in a sample that uses 8-quinolinol as an analytical chelating agent by forming a complex between the aluminum in the sample and 8-quinolinol under conditions in which the equivalent concentration of the 8-quinolinol in the reaction solution is not less than 180 times, preferably not less than 300 times, the aluminum concentration estimated to be contained in the reaction solution, and detecting the complex by chromatography.

**20.** A method for measuring an aluminum content in a sample that uses lumogallion as an analytical chelating agent by forming a complex between the aluminum in the sample and the lumogallion under conditions in which the equivalent concentration of lumogallion in the reaction solution is not less than 243 times, preferably not less than 400 times, the aluminum concentration estimated to be contained in the reaction solution, and detecting the complex by chromatography.

**21.** A method for measuring an aluminum content in a sample that uses 2,2'-dihydroxy-azobenzene as an analytical chelating agent by forming a complex between the aluminum in the sample and the 2,2'-dihydroxy-azobenzene under conditions in which the equivalent concentration of 2,2'-dihydroxy-azobenzene in the reaction solution is not less than 88 times, preferably not less than 150 times, the aluminum concentration estimated to be contained in the reaction solution, and detecting the complex by chromatography.

**22.** A method for measuring an aluminum content in a sample by forming a complex between the aluminum present in the sample and an analytical chelating agent under conditions in which the concentration of the analytical chelating agent in the reaction solution is not less than 6.67 mM, preferably not less than 12 mM, and detecting the complex by chromatography.

**23.** A method for measuring an aluminum content in a sample that contains 8-quinolinol as analytical chelating agent by forming a complex between the aluminum in the sample and the 8-quinolinol under conditions in which the concentration of 8-quinolinol in the reaction solution is not less than 6.67 mM, preferably not less than 12 mM, and detecting the complex by chromatography.

**24.** A method for measuring an aluminum content in a sample that contains lumogallion as analytical chelating agent by forming a complex between the aluminum in the sample and the lumogallion under conditions in which the concentration of lumogallion in the reaction solution is not less than 0.9 mM, preferably not less than 1,5 mM, and detecting the complex by chromatography.

**25.** A method for measuring an aluminum content in a sample that uses 2,2'-dihydroxy-azobenzene as analytical chelating agent by forming a complex between the aluminum in the sample and the 2,2'-dihydroxy-azobenzene under conditions in which the concentration of 2,2'-dihydroxy-azobenzene in the reaction solution is not less than 0.6 mM, preferably not less than 1 mM, and detecting the complex by chromatography.

**26.** A method for measuring the aluminium content in a sample according to any of claims 17 through 25, wherein the chromatography is in accordance with the pre-column derivitization method in which the chromatographic mobile phase does not contain analytical chelating agent.

**Amended claims under Art. 19.1 PCT**

**1.** A chelating reagent for aluminum measurement that contains an analytical chelating agent, used in a method for measuring an aluminum content in a sample by forming a complex between the aluminum in the sample and the analytical chelating agent under conditions in which the equivalent concentration of the analytical chelating agent in the reaction solution is not less than 6 times the conventional concentration, and detecting that complex by chromatography.

2. A chelating reagent for aluminum measurement according to claim 1, wherein a complex is formed between the aluminum in the sample and the analytical chelating agent under conditions in which the equivalent concentration of the analytical chelating agent in the reaction solution is not less than 10 times the conventional concentration.

3. A chelating reagent for aluminum measurement according to claim 1 or 2, wherein the analytical chelating agent is 8-quinolinol, said conventional concentration is 30 times the equivalent concentration of the aluminum concentration estimated to be contained in the reaction solution, and the concentration of the analytical chelating agent in said chelating reagent is not less than 540 times preferably not less than 900 times the equivalent concentration of the aluminum concentration estimated to be contained in the sample.

4. A chelating reagent for aluminum measurement of invention according to claim 1 or 2, wherein the analytical chelating agent is lumogallion, said conventional concentration is 40 times the equivalent concentration of the aluminum concentration estimated to be contained in the reaction solution, and the concentration of the analytical chelating agent in said chelating reagent is not less than 486 times, preferably not less than 810 times the equivalent concentration of the aluminum concentration estimated to be contained in the sample.

5. A chelating reagent for aluminum measurement of invention according to claim 1 or 2, wherein the analytical chelating agent is 2,2'-di-hydroxy-azobenzene, said conventional concentration is 15 times the equivalent concentration of the aluminum concentration estimated to be contained in the reaction solution, and the concentration of the analytical chelating agent present in said chelating reagent is not less than 81 times, preferably not less than 135 times, the equivalent concentration of the aluminum concentration estimated to be contained in the sample.

6. A chelating reagent for aluminum measurement according to any of claims 1 through 5, wherein the chromatography is in accordance with the pre-column derivitization method in which the chromatographic mobile phase does not contain analytical chelating agent.

7. A kit for measuring aluminum comprised of any of the chelating reagents according to claims 1 through 6, a buffer and a chromatographic eluate (mobile phase).

8. A chelating reagent for aluminum measurement that contains an analytical chelating agent, used in a method for measuring an aluminum content in a sample by forming a complex between the aluminum in the sample and the analytical chelating agent under conditions in which the equivalent concentration of the analytical chelating agent in the reaction solution is not less than 243 times, preferably not less than 400 times the aluminum concentration estimated to be contained in the reaction solution, and detecting that complex by chromatography.

9. A chelating reagent for aluminum measurement that contains 8-quinolinol as analytical chelating agent used in a method for measuring the aluminum content in a sample by forming a complex between the aluminum in the sample and the 8-quinolinol under conditions in which the equivalent concentration of 8-quinolinol in the reaction solution is not less than 180 times, preferably not less than 300 times the aluminum concentration estimated to be contained in the reaction solution, and detecting the complex by chromatography.

10. A chelating reagent for aluminum measurement that contains lumogallion as analytical chelating agent used in a method for measuring an aluminum content in a sample by forming a complex between the aluminum in the sample and the lumogallion under conditions in which the equivalent concentration of lumogallion in the reaction solution is not less than 243 times, preferably not less than 400 times, the aluminum concentration estimated to be contained in the reaction solution, and detecting the complex by chromatography.

11. A chelating reagent for aluminum measurement that contains 2,2'-dihydroxy-azobenzene as analytical chelating agent using a method for measuring an aluminum content in a sample by forming a complex between the aluminum in the sample and the 2,2'-dihydroxy-azobenzene under conditions in which the equivalent concentration of 2,2'-dihydroxy-azobenzene in the reaction solution is not less than 88 times, preferably not less than 150 times the aluminum concentration estimated to be contained in the reaction solution, and detecting the complex by chromatography.

**12.** A chelating reagent for aluminum measurement that contains an analytical chelating agent, used in a method for measuring an aluminum content in a sample by forming a complex between the aluminum in the sample and the analytical chelating agent under conditions in which the concentration of analytical chelating agent in the reaction solution is not less than 6.67 mM, preferably not less than 12 mM, and detecting the complex by chromatography.

**13.** A chelating reagent for aluminum measurement that contains 8-quinolinol as analytical chelating agent using a method for measuring an aluminum content in a sample by forming a complex between the aluminum in the sample and the 8-quinolinol under conditions in which the concentration of 8-quinolinol in the reaction solution is not less than 6.67 mM, preferably not less than 12 mM, and detecting the complex by chromatography.

**14.** A chelating reagent for aluminum measurement that contains lumogallion as analytical chelating agent using a method for measuring an aluminum content in a sample by forming a complex between the aluminum in the sample and the lumogallion under conditions in which the concentration of lumogallion in the reaction solution is not less than 0.9 mM, preferably not less than 1,5 mM, and detecting the complex by chromatography.

**15.** A chelating reagent for aluminum measurement that contains 2,2'-dihydroxy-azobenzene as analytical chelating agent using a method for measuring an aluminum content in a sample by forming a complex between the aluminum present in the sample and the 2,2'-dihydroxy-azobenzene under conditions in which the concentration of 2,2'-dihydroxy-azobenzene in the reaction solution is not less than 0.6 mM, preferably not less than 1mM, and detecting the complex by chromatography.

**16.** A chelating reagent for aluminum measurement according to any of claims 8 through 15, wherein the chromatography is in accordance with the pre-column derivitization method in which the chromatographic mobile phase does not contain analytical chelating agent.

**17.** A method for measuring an aluminum content in a sample by forming a complex between the aluminum in the sample and an analytical chelating agent under conditions in which the equivalent concentration of the analytical chelating agent in the reaction solution is not less than 6 times, preferably not less than 10 times, the conventional concentration, and detecting the complex by chromatography.

**18.** A method for measuring an aluminum content in a sample by forming a complex between the aluminum in the sample and an analytical chelating agent under conditions in which the equivalent concentration of the analytical chelating agent in the reaction solution is not less than 243 times, preferably not less than 400 times the aluminum concentration estimated to be contained in the reaction solution, and detecting the complex by chromatography.

**19.** A method for measuring an aluminum content in a sample that uses 8-quinolinol as an analytical chelating agent by forming a complex between the aluminum in the sample and 8-quinolinol under conditions in which the equivalent concentration of the 8-quinolinol in the reaction solution is not less than 180 times, preferably not less than 300 times the aluminum concentration estimated to be contained in the reaction solution, and detecting the complex by chromatography.

**20.** A method for measuring an aluminum content in a sample that uses lumogallion as an analytical chelating agent by forming a complex between the aluminum in the sample and the lumogallion under conditions in which the equivalent concentration of lumogallion in the reaction solution is not less than 243 times, preferably not less than 400 times the aluminum concentration estimated to be contained in the reaction solution, and detecting the complex by chromatography.

**21.** A method for measuring an aluminum content in a sample that uses 2,2'-dihydroxy-azobenzene as an analytical chelating agent by forming a complex between the aluminum in the sample and the 2,2'-dihydroxy-azobenzene under conditions in which the equivalent concentration of 2,2'-dihydroxy-azobenzene in the reaction solution is not less than 88 times, preferably not less than 150 times the aluminum concentration estimated to be contained in the reaction solution, and detecting the complex by chromatography.

**22.** A method for measuring an aluminum content in a sample by forming a complex between the aluminum present in the sample and an analytical chelating agent under conditions in which the concentration of the analytical chelating agent in the reaction solution is not less than 6.67 mM, preferably not less than 12mM, and detecting the complex by chromatography.

**23.** A method for measuring an aluminum content in a sample that contains 8-quinolinol as analytical chelating agent by forming a complex between the aluminum in the sample and the 8-quinolinol under conditions in which the concentration of 8-quinolinol in the reaction solution is not less than 6.67 mM, preferably not less than 12 mM, and detecting the complex by chromatography.

**24.** A method for measuring an aluminum content in a sample that contains lumogallion as analytical chelating agent by forming a complex between the aluminum in the sample and the lumogallion under conditions in which the concentration of lumogallion in the reaction solution is not less than 0.9 mM, preferably not less than 1.5 mM, and detecting the complex by chromatography.

**25.** A method for measuring an aluminum content in a sample that uses 2,2'-dihydroxy-azobenzene as analytical chelating agent by forming a complex between the aluminum in the sample and the 2,2'-dihydroxy-azobenzene under conditions in which the concentration of 2,2'-dihydroxy-azobenzene in the reaction solution is not less than 0.6 mM, preferably not less than 1mM, and detecting the complex by chromatography.

**26.** A method for measuring the aluminum content in a sample according to any of claims 17 through 25, wherein the chromatography is in accordance with the pre-column derivitization method in which the chromatographic mobile phase does not contain analytical chelating agent.

# Fig.1

# Fig.2

# Fig.3

<div align="center">

**INTERNATIONAL SEARCH REPORT**

</div>

| | International application No. |
|---|---|
| | PCT/JP01/07892 |

**A. CLASSIFICATION OF SUBJECT MATTER**
   Int.Cl⁷   G01N30/06

According to International Patent Classification (IPC) or to both national classification and IPC

**B. FIELDS SEARCHED**

Minimum documentation searched (classification system followed by classification symbols)
   Int.Cl⁷   G01N30/06

Documentation searched other than minimum documentation to the extent that such documents are included in the fields searched
   Jitsuyo Shinan Koho          1922-1996     Toroku Jitsuyo Shinan Koho  1994-2001
   Kokai Jitsuyo Shinan Koho   1971-2001     Jitsuyo Shinan Toroku Koho  1996-2001

Electronic data base consulted during the international search (name of data base and, where practicable, search terms used)
   CAS ONLINE    chromatog?, aluminium?, complex?, chelate?, hydroxyazobenzene?,
   quinolinol?, lumogallion?

**C. DOCUMENTS CONSIDERED TO BE RELEVANT**

| Category* | Citation of document, with indication, where appropriate, of the relevant passages | Relevant to claim No. |
|---|---|---|
| A | Susan H., "Aqueous Al(III) Speciation by High-Performance Cation Exchange Chromatography with Fluorescence Detection of the Aluminum-Lumogallion Complex", Anal. Chem., 67, (1995), pages 2343 to 2349 | 1-46 |
| A | Hitoshi HOSHINO, "2,2'-Dihydroxyazobenzene Derivatives as Reagents for Trace Metal Determination by Ion-pair Reversed-phase High-performance Liquid Chromatography With Spectrophotometric Detection", Analyst, 115, (1990), pages 133 to 137 | 1-46 |
| A | M. G. WHITTEN, "Forms of soluble aluminum in acidic topsoils estimated by ion chromatography and 8-hydroxyquinoline and their correlation with growth of subterranean clover", Journal of Soil Science, 43, (1992), pages 283 to 293 | 1-46 |

☐ Further documents are listed in the continuation of Box C.   ☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| Date of the actual completion of the international search <br>    03 October, 2001 (03.10.01) | Date of mailing of the international search report <br>    16 October, 2001 (16.10.01) |
| Name and mailing address of the ISA/ <br>    Japanese Patent Office | Authorized officer |
| Facsimile No. | Telephone No. |

Form PCT/ISA/210 (second sheet) (July 1992)